# NEUE EUROPÄISCHE PATENTSCHRIFT

(11) **EP 2 059 423 B2**
(45) Veröffentlichungstag und Bekanntmachung des Hinweises auf die Entscheidung über den Einspruch: **10.08.2016**
(45) Hinweis auf die Patenterteilung: 06.10.2010
(21) Anmeldenummer: 07785905.6
(22) Anmeldetag: 05.07.2007
(51) Int. Cl.: B60T 8/32, B60T 17/22, B60G 17/052

(54) **PNEUMATISCHES MODUL**
PNEUMATIC MODULE
MODULE PNEUMATIQUE

(30) Priorität: 31.08.2006 DE 102006040950
(43) Veröffentlichungstag der Anmeldung: 20.05.2009
(73) Patentinhaber: WABCO GmbH, 30453 Hannover (DE)
(72) Erfinder: RISSE, Rainer, 30982 Pattensen-Reden (DE); STENDER, Axel, 31787 Hameln (DE)
(86) Internationale Anmeldenummer: PCT/EP2007/005944
(87) Internationale Veröffentlichungsnummer: WO 2008/025403

(56) Entgegenhaltungen:
- EP-A- 0 976 635
- EP-A- 1 361 132
- EP-A- 1 500 531
- WO-A-01/53136
- WO-A-03/008249
- DE-A1- 19 515 895
- DE-A1- 19 835 638
- DE-B3- 10 314 642
- DE-B3-102004 026 624
- DE-B4- 10 314 643
- US-A- 5 236 250
- US-A- 5 458 403
- US-A- 5 466 053
- US-A- 5 553 928
- US-A- 5 577 814
- US-B1- 6 179 391
- US-B1- 6 247 764

## Beschreibung

Die Erfindung betrifft ein pneumatisches Modul für ein mit Druckluft gebremstes Fahrzeug, insbesondere für ein Anhängefahrzeug gemäß dem Oberbegriff des Patentanspruchs 1, wie aus WO 01/53136 A1 bekannt.

Heute ist es üblich, abhängig von Kundenwünschen, Anhängefahrzeuge aufzubauen. Aufgrund der Vielzahl der möglichen Varianten die seitens der Kunden gewünscht werden, erfolgt die Montage der Anhängefahrzeuge größtenteils manuell. Hierzu müssen die einzelnen, mit Druckluft betriebenen Komponenten des Anhängefahrzeugs miteinander verbunden werden. Hierzu werden bisher üblicherweise Leitungsverbindungen, insbesondere sogenannte T-Stücke, verwendet..

Nachteilig bei der heute üblichen Herstellung von Anhängefahrzeugen ist, dass bei der Installation der Brems- und Luftfederungsanlage beim Anhängefahrzeughersteller ein hoher Montageaufwand aufgrund der vielen Komponenten und Verbindungen notwendig ist.

Der Erfindung liegt deshalb die Aufgabe zugrunde, den Montageaufwand und die Kosten bei der Montage eines Anhängefahrzeugs zu verringern.

Diese Aufgabe wird durch das im Patentanspruch 1 angegebene pneumatische Modul gelöst.

Das erfindungsgemäße pneumatische Modul wird vorteilhaft mit einem Modulator der Bremsanlage eines Anhängefahrzeugs verbunden, an diesen angebracht, z.B. durch Anflanschen, oder in diesen baulich integriert. Der Modulatorweist dabei vorteilhaft pneumatische Ventile zur Einstellung des Bremsdrucks auf, z.B. Ventile zur Druckerhöhung und zur Druckverringerung.

Gemäß einer vorteilhaften Weiterbildung der Erfindung weist der Modulator Steuerungs- bzw. Regelungsmittel eines Antiblockiersystems (ABS) oder ein elektronischen Bremssystems (EBS) des Anhängerfahrzeugs auf, wie z.B. Sensoren zur Drehgeschwindigkeitsermittlung der Fahrzeugräderund entsprechende Steuerungs- bzw. Regelungsalgorithmen.

Die Druckverteilung für eine Luftfederungsanlage des Anhängefahrzeugs ist ebenfalls in dem pneumatischen Modul integriert.

Durch das pneumatische Modul wird die Anzahl der Komponenten im Anhängefahrzeug reduziert. Dies bietet Herstellern von Anhängefahrzeugen erhebliche Kostenvorteile durch den Wegfall von externen T-Stükken und Verteilern. Hierdurch wird auch eine kürzere Montagezeit erreicht und es können Fehler bei der Montage, beispielsweise durch Leckagen an den T-Stücken, vermieden werden.

Die Erfindung wird anhand eines Ausführungsbeispiels beschrieben. Bauteile mit denselben Funktionen tragen hierbei gleiche Bezugszeichen.

Es zeigt
- Fig. 1: schematisch die Bremsanlage eines Anhängefahrzeuges gemäß dem Stand der Technik und
- Fig. 2: schematisch die Bremsanlage eines Anhängefahrzeuges mit Einsatz der Erfindung und
- Fig. 3: eine erste Ausführungsform des pneumatischen Moduls und
- Fig. 4: eine zweite Ausführungsform des pneumatischen Moduls.

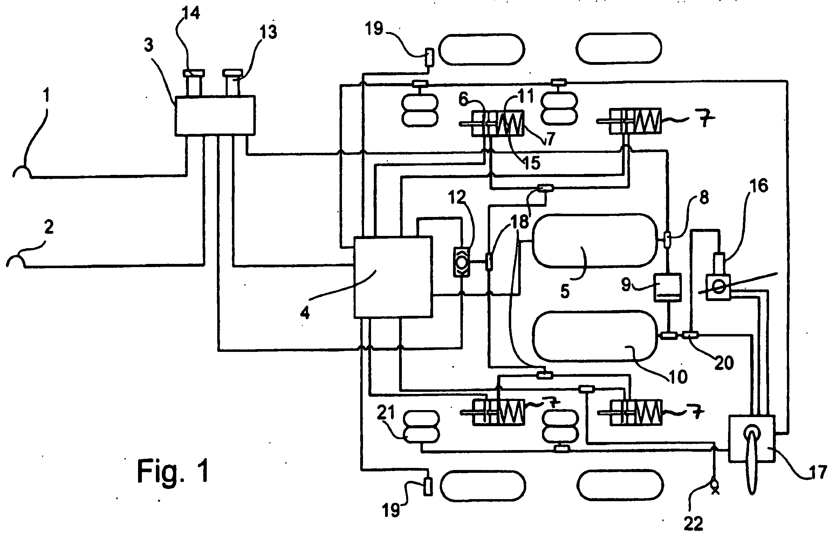

Fig. 1 zeigt schematisch die Bremsanlage eines Anhängefahrzeuges gemäß dem Stand der Technik. Das Anhängefahrzeug ist mit zwei Druckluftleitungen, eine für einen Vorratsdruck (1) und eine für einen Steuerdruck (2), mit einem Zugfahrzeug verbunden. Über ein Anhängerbremsventil (3) wird der Steuerdruck zu einem Modulator (4) einer Bremsanlage geleitet Bei dieser Bremsanlage kann es sich um eine blockierschutzgeregelte Bremsanlage (ABS) oder um eine elektronische Bremsanlage (EBS) handeln, wobei selbstverständlich auch die elektronische Bremsanlage (EBS) eine Blokkierschutzregelung (ABS) umfassen kann.

In das Anhängerbremsventil (3) ist die Funktion eines Doppellbseventils integriert. Zur Realisierung der Funktion des Doppellöseventils weist das Anhängerbremsventil (3) einen Betätigungsknopf (13) zur Betätigung einer Parkbremsanlage sowie einen weiteren Betätigungsknopf (14) zum Lösen einer automatischen Bremse bei abgekoppeltem Anhängefahrzeug auf. Der Vorratsdruck wird über ein im Anhängerbremsventil (3) integriertes Rückschlagventil zu einem Vorratsdruckbehälter (5) für die Bremsanlage geführt. Dieser Vorratsdruckbehälter (5) steht mit dem Modulator (4) in Verbindung und versorgt ihn mit Vorratsdruckfürdie Betätigung der Fahrzeugbremsen. Ebenfalls sind mindestens zwei ABS-Sensoren (19) zur Sensierung der Raddrehzahlen an dem Modulator (4) angeschlossen. Von dem Modulator (4) werden mehrere Kombibremszylinder (7), welche zur Bremsung der Fahrzeugrädem dienen, angesteuert. Die Kombibremszylinder (7) umfassen jeweils ein Betriebsbremsteil (6) und ein Parkbremsteil (11). Ferner ist an mindestens einem Betriebsbremsteil ein Prüfanschluss (22) zum Messen des aktuellen Bremsdrucks vorgesehen. Über ein T-Stück (8) steht der Vorratsdruckbehälter (5) für die Bremsanlage mit einem Überströmventil (9) und einem daran angeschlossenen Vorratsdruckbehälter (10) für eine Luftfederungsanlage des Anhängefahrzeugs in Verbindung, wobei dieser Vorratsdruckbehälter (10) für die Luftfederung aus dem Vorratsdruckbehälter (5) für die Bremsanlage befüllbar ist.

Die Luftfederungsanlage umfasst hierbei ein Luftfederventil (16), ein Heben-/Senken-Ventil (17) und Tragbälge (21). Das Luftfederventil (16) wird über ein T-Stück (20) mit Vorratsdruck aus dem Vorratsdruckbehälter (10) für die Luftfederung versorgt und regelt das Fahrniveau des Anhängefahrzeugs aus, indem die Luftmenge in den Tragbälgen (21) verändert wird. Über das Heben-/Senken-Ventil (17) kann das Niveau des Anhängefahrzeugs, zum Beispiel zum Be- oder Entladen des Anhängefahrzeugs, von Hand, d. h. beispielsweise durch den Fahrzeugführer, verändert werden. Das Überströmventil (9) hat hierbei die Aufgabe, bei Druckverlust in der Luftfederungsanlage den Druck in der Betriebsbremsanlage zu sichern, und so die Bremsfähigkeit des Anhängefahrzeugs sicherzustellen.

Um die Radbremsen vor einer Zerstörung durch eine Überbeanspruchung durch eine Kraftaddition der Kombibremszylinder (7) zu schützen, ist in der Bremsanlage ein Überlastschutzventil (12) vorhanden, welches beispielsweise aus einem 3/2 Wegeventil bestehen kann. Das Überlastschutzventil (12) ist hierbei zwischen dem Anhängerbremsventil (3) und dem Modulator (4) angeordnet, wobei das Überlastschutzventil (12) den Druck über T-Stücke (18) an die einzelnen Kombibremszylinder (7) verteilt.

Die Parkbremse des Anhängerfahrzeugs wird durch Betätigung des Betätigungsknopf (13) eingelegt. Hierdurch wird jeweils der Parkbremsteil (11) des zugehörigen Kombibremszylinders (7) entlüftet, so dass die in dem Parkbremsteil (11) integrierte Feder (15) die Radbremse betätigen kann.

Wird bei betätigter Parkbremse zusätzlich die Betriebsbremse betätigt, fließt der Bremsdruck über das Überlastschutzventil (12) in den Parkbremsteil (11) der Kombibremszylinder (7) und baut so proportional zur aufgebauten Bremskraft im Betriebsbremsteil (6) die Kraft im Parkbremsteil ab, so dass keine Kraftaddition stattfindet.

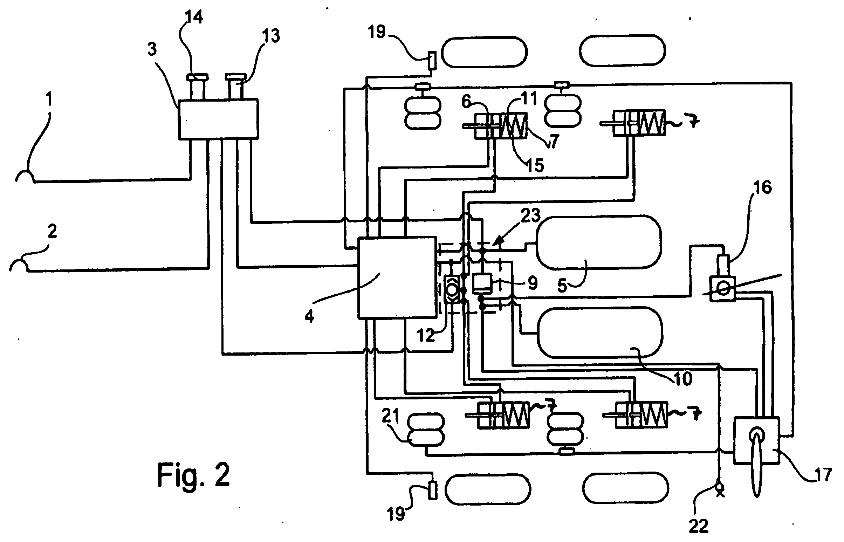

Fig. 2 zeigt schematisch die Bremsanlage eines Anhängefahrzeuges mit Einsatz der Erfindung. In Fig. 2 ist ein pneumatisches Modul (23) mit dem Modulator (4) verbunden. Diese Verbindung kann so ausgestattet sein, dass das pneumatische Modul (23) über Leitungen entfernt von dem Modulator (4) am Anhängefahrzeug angeordnet werden kann. Das pneumatische Modul (23) kann auch direkt an dem Modulator (4) angeflanscht oder in diesem integriert sein. Das pneumatische Modul umfasst hierbei das Überströmventil (9) und das Überlastschutzventil (12). An das pneumatische Modul (23) wird das Anhängerbremsventil (3), die Vorratsdruckbehälter (5, 10), das Luftfederventil (16), der Prüfanschluss (22), das Heben-/Senken-Ventil (17) und die Kombibremszylinder (7) angeschlossen. Durch die nun innerhalb des pneumatischen Moduls (23) stattfindende Verrohrung derangeschlossenen Bauteile können die T-Stücke (Fig. 1, dort Bezugszeichen 8, 18 und 20) eingespart werden.

Durch die ebenfalls integrierte Druckverteilung der Luftfederungsanlage existieren nur noch sogenannte Punkt-zu-Punkt-Verbindungen zwischen dem pneumatischen Modul (23) und den angeschlossenen Bauteilen. Hierdurch vereinfacht sich dergesamte Verrohrungsaufwand bei der Herstellung eines Anhängefahrzeugs, wodurch einerseits Kosten, aufgrund der nicht mehr benötigten T-Stücke, und Fehlerquellen, z. B. durch undichte Anschlüsse an den T-Stücken, vermieden werden.

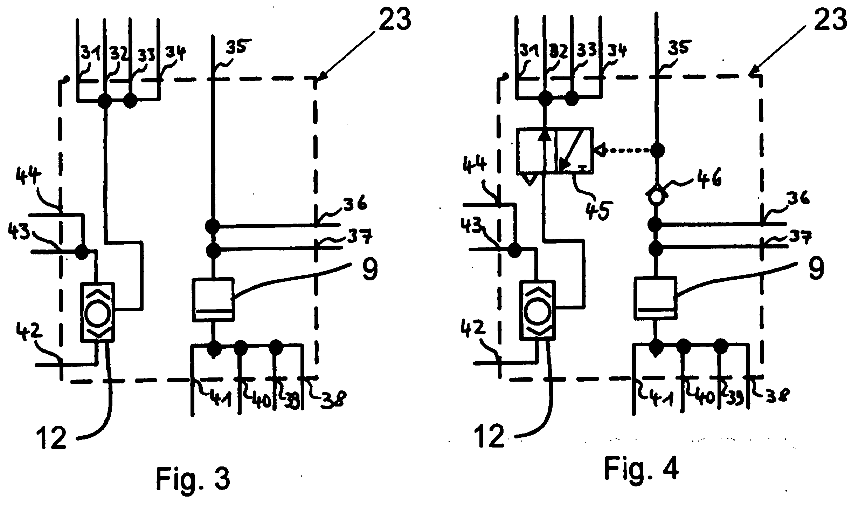

In der Fig. 3 ist eine erste Ausführungsform des pneumatischen Moduls (23) dargestellt. Sofern das pneumatische Modul (23) nicht in den Modulator (4) baulich integriert ist, weist es ein Gehäuse (24) auf. In diesem Fall ist das pneumatische Modul (23) als separat handhabbares Druckluftgerät ausgebildet. Dieses Druckluftgerät kann über pneumatische Leitungen mit dem Modulator (4) verbunden werden. Gemäß einer vorteilhaften Ausgestaltung kann das Druckluftgerät auch direkt an dem Gehäuse des Modulators (4) angebracht werden, zum Beispiel durch Anschrauben oder Anflanschen. Gemäß einerweiteren vorteilhaften Ausgestaltung kann das pneumatische Modul (23) auch direkt in den Modulator (4) baulich integriert sein.

In jedem Fall weist das pneumatische Modul (23) folgende pneumatische Anschlüsse auf. Die pneumatischen Anschlüsse sind bei baulicher Integration in dem Modulator (4) als Anschlüsse des Modulators (4) ausgebildet.
- Wenigstens einen pneumatischen Anschluss (31, 32, 33, 34) zum Anschluss der Parkbremsteile (11) der Kombibremszylinder (7).
- Wenigstens einen pneumatischen Anschluss (35) zum Anschluss des Vorratsdruckanschlusses des Anhängerbremsventils (3).
- Wenigstens einen pneumatischen Anschluss (36) zum Anschluss des Vorratsbehälters (5).
- Wenigstens einen pneumatischen Anschluss (37) zum Anschluss an den Modulator (4), zwecks Druckluftversorgung des Modulators (4) mit Vorratsdruck.
- Wenigstens jeweils einen pneumatischen Anschluss (38, 39, 40, 41) zum Anschluss derverschiedenen Komponenten der Luftfederungsanlage, nämlich des Vorratsbehälters (10), des Luftfederventils (16), des Heben-/Senken-Ventils (17) sowie eines zusätzlich verbaubaren, nicht in den Figuren dargestellten Liftachsventils. Das Liftachsventil dient dabei zur Steuerung des Hebens und Senkens der Liftachse.
- Wenigstens einen pneumatischen Anschluss (42) zum Anschluss des Parkventilanschlusses des Anhängerbremsventils (3), das heißt desjenigen Anschlusses, der die Parkbremsfunktion mittels einer Entlüftung der Parkbremsteile (11) der Kombibremszylinder (7) bewirkt.
- Wenigstens einen pneumatischen Anschluss (43) zum Anschluss an den Modulator (4), zwecks Ausgabe des Bremsdrucks vom Modulator (4).
- Wenigstens einen pneumatischen Anschluss (44) zum Anschluss des Prüfanschlusses (22).

Bei baulicher Integration des pneumatische Moduls (23) in den Modulator (4) sind die Anschlüsse (37, 43) nicht als äußere pneumatische Anschlüsse des Modulators (4) ausgeführt, sondern in dem Modulator (4) direkt angeschlossen.

In der Fig. 4 ist eine zweite vorteilhafte Ausführungsform des pneumatischen Moduls (23) dargestellt, bei dem zusätzlich zu den anhand der Fig. 3 bereits erläuterten Elementen in der Druckluftleitung zwischen dem Überiastschutzventil (12) und den pneumatischen Anschlüssen (31, 32, 33, 34) eine Ventileinrichtung (45) vorgesehen ist, die bei einem Abriss des Vorratsdruckanschlusses (1) von dem Zugfahrzeug, das heißt bei fehlender Druckluftversorgung vom Zugfahrzeug, für eine Entlüftung der Parkbremsteile (11) der Kombibremszylinder (7) sorgt. Die Ventileinrichtung kann vorteilhaft, wie in der Fig. 4 dargestellt, als pneumatisch betätigbares 3/2-Wegeventil ausgebildetsein, das eine Druchlassstellung und einer Entlüflungsstellung aufweist. Ein solches 3/2-Wegeventil (45) wird vorteilhaft über den Druck in der mit dem Anschluss (35) verbundenen Leitung, die zur Verbindung mit dem Vorratsdruckanschluss des Anhängerbremsventils (3) dient, verbunden. Es ist auch vorteilhaft, die Ventileinrichtung (45) als elektrisch ansteuerbares Ventil auszubilden, welches dann bei Erkennung kritischer Bedingungen, wie etwa einem Abriss des Vorratsdruckanschlusses (1), von dem Modulator(4) bzw. dessen Steuerelektronik gesteuert in die Entlüftungsstellung umgeschaltet wird.

Des Weiteren ist in der Ausführungsform gemäß Fig. 4 ein Rückschlagventil (46) zwischen dem Anschluss (35) und den Anschlüssen (36, 37) bzw. dem Überströmventil (9) angeordnet. Das Rückschlagventil (46) verhindert eine unerwünschte Druckentlüftung des Vorratsbehälters (5) bei einem Druckabfall in dermitdem Anschluss (35) verbundenen Druckluftleitung.

Bei Verwendung des pneumatischen Moduls in der Ausführungsform gemäß Fig. 4 kann statt eines relativ aufwändigen Anhängerbremsventils (3) ein einfaches Doppellöseventil ohne die vorgenannte Schutzfunktion gegen einen Abriss der Vorratsleitung (1) vorgesehen werden. Dies führt zu einer weiteren Kostenreduzierung der Anhängerbremsanlage.

## Patentansprüche

1. a) Pneumatisches Modul für ein mit Druckluft gebremstes Fahrzeug, insbesondere für ein Anhängefahrzeug, wobei das Fahrzeug mindestens einen Vorratsdruckbehälter (5, 10) für Druckluft, eine pneumatische Bremsanlage (6, 7, 11) und eine Luftfederungsanlage mit Tragbälgen (21) aufweist,
**dadurch gekennzeichnet, dass**
b) in dem pneumatischen Modul (23) ein Überströmventil (9) integriert ist, welches bei einem Druckverlust in der Luftfederungsanlage den Druck in der Bremsanlage sichert, und
c) in dem pneumatischen Modul (23) ein Überlastschutzventil (12), welches die Bremsanlage vor einer Überbeanspruchung und die Radbremsen vor einer Zerstörung durch eine Kraftaddition von Kombibremszylindern (7) der Bremsanlage schützt, integriert ist und
d) in dem pneumatischen Modul (23) die Druckverteilung für die Luftfederungsanlage integriert ist.

2. Pneumatisches Modul nach Anspruch 1, **dadurch gekennzeichnet, dass** das pneumatische Modul (23) mit einem Modulator (4) einer elektronischen (EBS) und/oder einer blockierschutzgeregelten (ABS) Bremsanlage verbunden ist.

3. Pneumatisches Modul nach wenigstens einem der vorhergehenden Ansprüche, **dadurch gekennzeichnet, dass** das pneumatische Modul (23) an einem Modulator (4) einer elektronischen (EBS) und/oder einer blockierschutzgeregelten (ABS) Bremsanlage angebracht oder in diesen integriert ist.

4. Pneumatisches Modul nach wenigstens einem der vorhergehenden Ansprüche, **dadurch gekennzeichnet, dass** eine Ventileinrichtung (45) zur Entlüftung von wenigstens einem Parkbremsteil (11) eines an dem pneumatischen Modul (3) angeschlossenen Kombibremszylinders (7) vorgesehen ist.

## Claims

1. a) Pneumatic module for a vehicle which is braked using compressed air, in particular for a trailer vehicle, wherein the vehicle has at least one supply pressure vessel (5, 10) for compressed air, a pneumatic brake system (6, 7, 11) and an air suspension system with support bellows (21),
**characterized in that**
b) an overflow valve (9), which ensures the pressure in the brake system in the event of a loss of pressure in the air suspension system, is integrated into the pneumatic module (23) and
c) an overload protection valve (12), which protects the brake system against overloading and the wheel brakes against destruction as a result of addition of forces of combination brake cylinders (7) of the brake system, is integrated into the pneumatic module (23) and
d) the pressure distribution means for the air suspension system is integrated into the pneumatic module (23).

2. Pneumatic module according to Claim 1, **characterized in that** the pneumatic module (23) is connected to a modulator (4) of an electronic brake system (EBS) and/or of an anti-lock brake system (ABS).

3. Pneumatic module according to at least one of the preceding claims, **characterized in that** the pneumatic module (23) is mounted on a modulator (4) of an electronic brake system (EBS) and/or of an anti-lock brake system (ABS) or is integrated into the latter.

4. Pneumatic module according to at least one of the preceding claims, **characterized in that** a valve device (45) for venting at least one parking brake component (11) of a combination brake cylinder (7) which is connected to the pneumatic module (3) is provided.

## Revendications

1. a) Module pneumatique pour un véhicule freiné par air comprimé, notamment pour un véhicule remorque, le véhicule présentant au moins un réservoir de pression (5, 10) pour de l'air comprimé, une installation de freinage pneumatique (6, 7, 11) et une installation de suspension à air avec des soufflets de support (21),
**caractérisé en ce que**
b) l'on intègre dans le module pneumatique (23) une soupape de débordement (9), qui protège la pression dans l'installation de freinage en cas de perte de pression dans l'installation de suspension à air, et
c) l'on intègre dans le module pneumatique (23) une soupape de protection contre les surcharges (12), qui protège l'installation de freinage contre une sollicitation excessive et qui protège les freins de roue contre une destruction par une force additionnelle de cylindres de freinage combinés (7) de l'installation de freinage, et
d) l'on intègre dans le module pneumatique (23) la distribution de pression pour l'installation de suspension à air.

2. Module pneumatique selon la revendication 1, **caractérisé en ce que** le module pneumatique (23) est connecté à un modulateur (4) d'une installation de freinage électronique (EBS) et/ou d'une installation de freinage régulée à antiblocage (ABS).

3. Module pneumatique selon au moins l'une quelconque des revendications précédentes, **caractérisé en ce que** le module pneumatique (23) est monté sur un modulateur (4) d'une installation de freinage électronique (EBS) et/ou d'une installation de freinage régulée à antiblocage (ABS) ou est intégré dans celui-ci.

4. Module pneumatique selon au moins l'une quelconque des revendications précédentes, **caractérisé en ce que** l'on prévoit un dispositif de soupape (45) pour ventiler au moins une partie de frein de stationnement (11) d'un cylindre de freinage combiné (7) raccordé au module pneumatique (3).
